# EUROPEAN PATENT SPECIFICATION

(11) **EP 3 678 476 B1**
(45) Date of publication and mention of the grant of the patent: **10.08.2022**
(21) Application number: 18769428.6
(22) Date of filing: 04.09.2018
(51) Int. Cl.: A01K 1/015, A01K 1/12, A01J 7/04

(54) **POSITIONING DEVICE**
POSITIONIERUNGSVORICHTUNG
DISPOSITIF DE POSITIONNEMENT

(30) Priority: 04.09.2017 GB 201714132
(43) Date of publication of application: 15.07.2020
(73) Proprietor: Ambic Equipment Limited, Witney, Oxfordshire OX28 4YF (GB)
(72) Inventor: HILEY, Richard, Witney, Oxfordshire OX28 4YF (GB)
(74) Representative: Bingham, Ian Mark
(86) International application number: PCT/GB2018/052504
(87) International publication number: WO 2019/043418

(56) References cited:
- EP-A1- 2 547 197

## Description

### FIELD OF THE INVENTION

The present invention relates to a positioning device that encourages animals to stand in a desired position in, for example, a milking stall to enable efficient and effective milking, feeding or treatment of the animal.

### BACKGROUND TO THE INVENTION

It is known to use positioning devices in milking stalls such as to ensure the feet of the animal are maintained apart by a desired amount when the animal is in a milking position and one such device is shown in EP2547197. The device itself comprises a base plate with at least one pair of equal length longitudinally extending raised portions upstanding from the base plate and one or more valley regions located between the raised portions where the profile of each of the raised portions, and the profile of the one or more of the valley regions, is convex. The device is referred to as a "positioner" and is secured to the floor in a milking stall at a permanently fixed position immediately below where the operator would like the udder of the cow to be positioned during any milking or treatment operations. A cow, goat, sheep or other animal is led or ushered into the stall prior to milking and the animal adjusts its position so as to avoid its hooves resting on the raised portions or in the valley there between and by so doing the cow, effectively, self-adjusts its position so that its rear legs straddle the positioner and are spaced either side thereof. The spacing allows for easy access to the udder and teats for milking and treatment and the accurate positioning of the udder and teats can allow for the use of automated milking systems and helps the milking cluster to hand evenly which facilitates good and even milk output from all four quarters. The position of the positioner is also selected so as to ensure the front end of the animal is optimally positioned relative to any feeding systems or other devices that may be provided at the front of the milking stall.

Whilst the above design provides a perfectly acceptable solution to the problem in many uses thereof, the device does not lend itself to efficient use in certain installations where the longitudinal axis of the milking stall is anything other than perpendicular to the rear edge of the stall. Such is the case in rotary milking parlours and in angled and herringbone patterned milking parlours, each of which are now extensively used in situations where space is at a premium, or large numbers of animals are being processed. Angled bails also have the advantage of aiding cow flow to speed up the process of cows entering and leaving the cow bail or stall.

In all arrangements, the positioning device is positioned towards the rear edge of the milking stall but is positioned just short of the rear edge of the stall itself and a small gap is left between the rearmost portion of the positioner and the rear edge of the stall which is insufficient for the animal in question to comfortably place its hooves and, hence, the animal will re-position itself at a more forward position which will be closer to that desired by the operator. Whilst it is relatively easy to ensure the appropriate positioning happens in a stall where the rear edge of the stall is perpendicular to the longitudinal axis of the stall itself, it is not easy to do this in an angled stall as the gap between the rear edge of the stall and the positioner will be different on each side of the stall. An animal placed in the stall may find it possible to place one of its rear hooves behind rather than to the side of the positioner and if this happens the entire position of the animal will be misaligned and rearwards of the optimal milking, feeding and treatment position.

### STATEMENT OF AIMS AND ADVANTAGES

The Applicant has determined that the efficiency or effectiveness of one or more of: milking; feeding; or treatment of the animal can be improved still further by optimising the position of the animal being milked relative to the front and rear of the milking stall and relative to the longitudinal axis of the stall whilst also ensuring the feet of the animal are correctly spaced so as to ensure good access to the udders and teats of the animal. One or more of these improvements can be provided by ensuring the animal is encouraged to find an optimal position sufficiently close to the front of the stall as to allow for easy access to any food being provided whilst also allowing the hind legs of the animal to be slightly splayed and evenly positioned on either side of the animal in a manner that avoids the animal being able to place a hoof behind the positioning device and may also provide better indexing of animals in herringbone and 90° milking parlours.

Thus, the aim of the present invention is to provide a positioning device that may optionally include spray nozzles, which has a shape to keep the rear hooves of an animal apart by a desired amount whilst ensuring the rear hooves cannot comfortably be positioned behind the positioning device whilst also ensuring the animal finds a naturally comfortable position sufficiently forwards as to allow for easy access to any food being provided.

Another aim is to provide a positioning device that allows a suitable depth for the milking cluster to hang unimpeded under the animal to achieve good cluster positioning and therefore a good milk-out. A further aim is to provide a positioning device that ensures the animal is correctly positioned relative to any spray nozzles that that may be provided for the treatment of the animal's teats. In this way, not only can chemical costs be kept to a minimum but it will also reduce the environmental impact of using the spraying liquids. Still further, the arrangement will assist with ensuring a high level of teat and teat barrel coverage is achieved. A still further aim of the present invention is to ensure that the animal's rear hooves are correctly positioned such as to ensure easy access for any milking equipment. These and other advantages are provided by the present invention, as discussed below.

In respect of the present invention all references to the treatment chemical shall be interpreted to include chemical in liquid and/or foamed form.

### STATEMENT OF INVENTION

According to one aspect of the present invention there is provided a positioning device, having a front end and a rear end and having a longitudinal axis, comprising a base plate with at least one pair of first and second raised portions of respective lengths L1, L2 and upstanding from the base plate and one or more valley regions located between the raised portions, wherein one of said raised portions extends rearwardly in the direction of axis LP by an amount (N) greater than the other.

In one arrangement, one of said first or second raised portions may extend forwardly of the other of said raised portions in the direction of axis (LP) by an amount greater than the other.

Said first of said raised portions may extend forwardly and rearwardly in the direction of axis (LP) by an amount (M, N)
said first raised portion (30) may comprise the portion on the Left-Hand Side (LHS) of the longitudinal axis (LP) when looking forwards from the rear of the device.

Said first raised portion may comprise the portion on the Right-Hand Side (RHS) of the longitudinal axis (LP) when looking forwards from the rear of the device.

In one arrangement, the amount M is equal to the amount N. In an alternative arrangement, the amount M is not equal to the amount N.

The positioner may include a rear portion angled at an angle (β) relative to a perpendicular (P) to the longitudinal axis (LP) of the positioner.

The device may be positioned within an angled milking stall having a longitudinally extending axis L and a rear edge at an angle B relative to said longitudinal axis L and wherein said positioning device is installed at an angle θ to said rear edge, thereby to provide an even gap G between the rear portion and the rear edge.

The device may be positioned on a rotary milking stall having a radial axis RL and a rear edge at an angle α relative to said longitudinal axis radial axis RL and wherein said positioning device (16) is installed at an angle θ to a tangent T of said rear edge, thereby to provide an even gap G between the rear portion and the rear edge.

The profile of each of the raised portions, and the profile of one or more of the valley regions, may be convex.

The device may also include one or more spray nozzles. The one or more spray nozzles may be located on one or more of the raised portions. The positioner may include one or more spray nozzles located on one or both raised portions. The device may include four spray nozzles.

The device may further include a spray nozzle control to activate one or more of the nozzles to spray in any combination.

The device may also include a mounting member for enabling the mounting of the device to the floor of a milking parlour and/or the platform of a rotary-platform milking system.

The device may also include a remote reservoir container and supply system between the reservoir container and the one or more nozzles. The remote reservoir container may be located on a platform of a rotary platform milking system.

The device may also include a milking platform. The platform may be a rotary milking platform.

### BRIEF DESCRIPTION OF THE DRAWINGS

Aspects and embodiments of the present invention will now be more particularly described with reference to the following drawings in which:

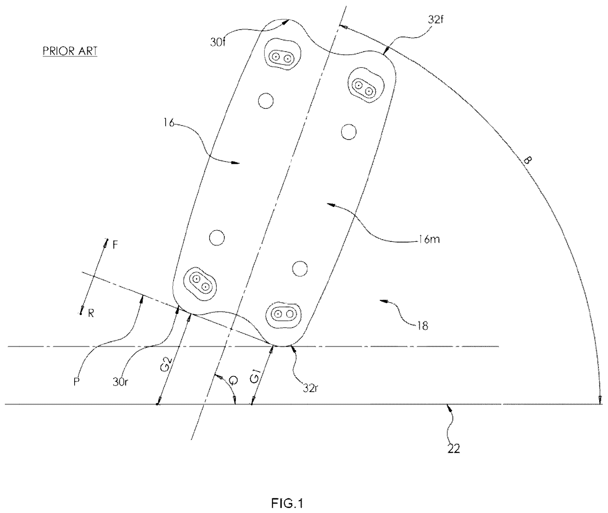

Figure 1 is a plan view of a prior art positioning device installed in a milking stall and which illustrates at least one of the problems associated with the prior art.
Figure 2, is an isometric view of a positioning device according to some aspects of the present invention;
Figure 3, is a plan view of the positioning device in figure 1;
Figure 4, is a side elevation of the positioning device of figures 1 and 2;
Figure 5, is a plan view of an alternative form of positioning device;
Figure 6, is a partial plan view of the positioning device of figures 1 to 4 positioned in multiple milking stalls arranged in a herringbone configuration;
Figure 7, is a partial plan view of the positioning device of figures 1 to 4 positioned in multiple milking stalls arranged in a rotary (circular) configuration;

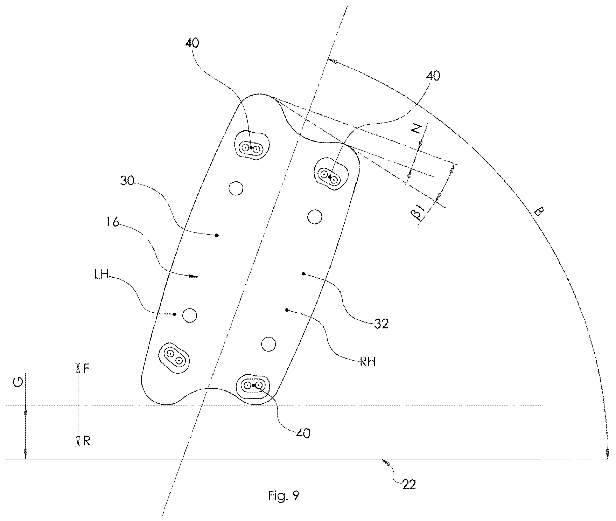

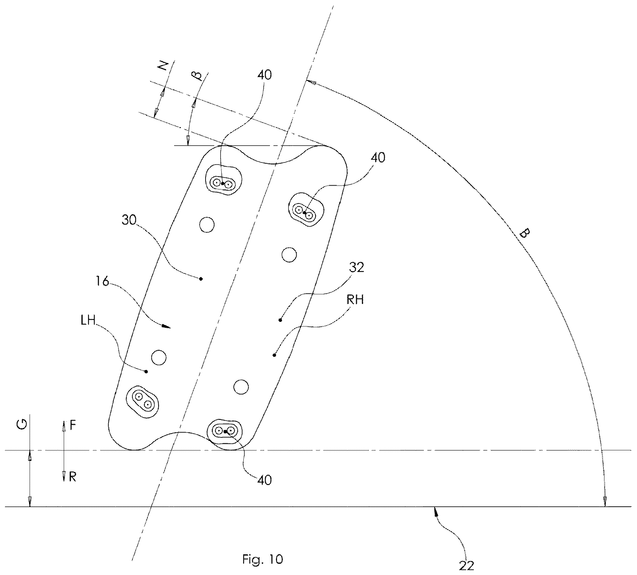

Figures 8 to 10, are enlarged plan views of different forms of the positioning device of figures 1 to 4 positioned towards the rear edge of a milking stall; and
Figure 11, is a schematic representation of the supply system in combination with the positioner shown in the above-mentioned apparatus.

### DETAILED DESCRIPTION

### Prior art

The Applicants have studied the range of positions an animal might settle in when installed in a milking stall and found that some animals find it difficult to correctly position their rear hooves when standing in a milking stall 10 arranged in a herringbone or circular pattern 12, 14. The most desired positions for the rear hooves would be equally spaced on either side of the positioning device 16 in a position straddling the mid portion 16m of the positioning device itself as the positioning device 16 is located on the floor 18 of the stall 20 such as to ensure an animal so positioned will be close enough to the front F of the stall 20 for feeding purposes and the rear legs of the animal will straddle the mid portion 16m of the positioning device 16 so as to ensure easy access to the teats for milking and treatment. It will be appreciated that the positioning device 16 must be installed at a position spaced from the rear edge 22 of the stall and that a device so positioned will have a gap G between the rear ends thereof 16a, 16b and the edge 22 of the stall itself. Such a gap G is equal when the positioning device is installed at an angle perpendicular to the rear edge 22 but the gap G is different on either side of the positioning device 16 when the device 16 is installed at an angle α relative to the rear edge 22, as would be the case in stalls arranged in a herringbone or circular arrangement of subsequent figures. It has been found that the existence of a different gap G¹, G² on either side of the stall 20 can cause the animal to find it difficult to find a natural position where the teats are immediately above the mid-position 16m of the positioner 16 as the larger of the two gaps G² is sometimes sufficient to allow the animal to place a hoof down on the floor 18 either rearward R of the positioning device itself or at a position which causes the rear hooves of the animal to be staggered along the longitudinal axis L of the stall 20. Such positioning of the hooves will prevent easy access to the teats for milking and treatment purposes whilst also causing the animal to be positioned rearwardly of the most desired mid-positioner position. The position thus adopted is less comfortable to the animal and can cause distress and is also likely to be such as to prevent the animal accessing any food that may be placed at the front F of the stall.

### Present Invention

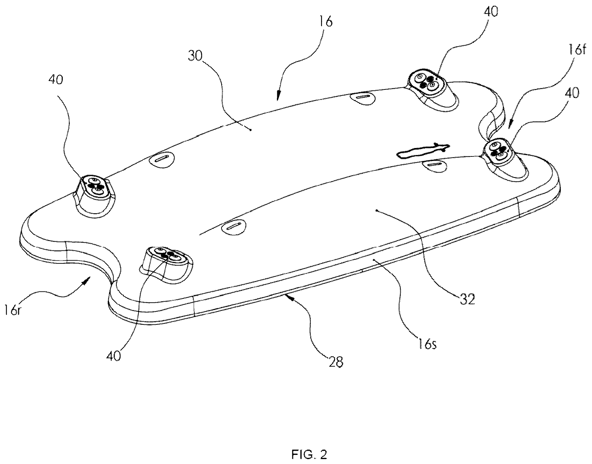

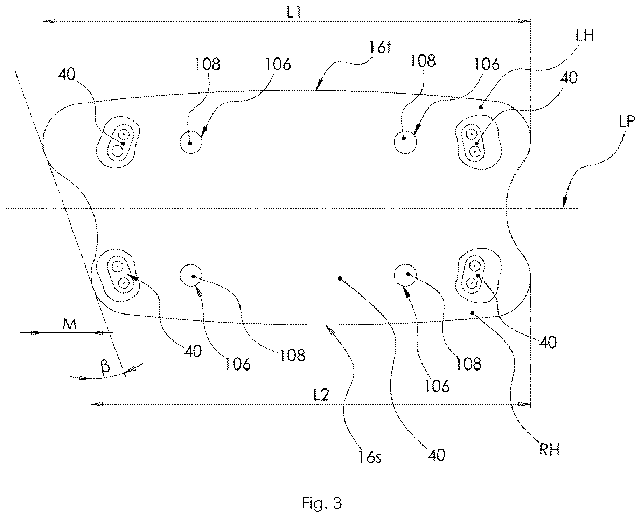

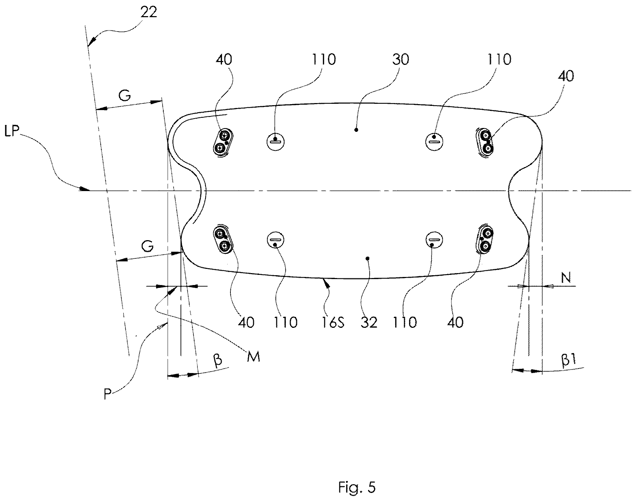

Aspects of the present invention are shown in the remaining figures but reference is first made to figures 2 to 5 which illustrate the positioning device 16 according to aspects of the present invention in detail. From figure 2, it will be appreciated that the positioner 16 has a front end 16f, a rear end 16r and first and second sides 16s and 16t. The positioner 16 also includes a base plate 28 and upstanding first and second raised portions 30, 32 of respective lengths L1, L2 and which each are upstanding from the base plate 28 and extend axially either side of but in the direction of longitudinal axis LP of the positioner 16. One or more valley regions 34 are formed between the first and second raised portions 30, 32 which gives improved access to the teats of an animal. Preferably at least one of the one or more valley regions 34 runs generally along the central longitudinal axis LP. As best illustrated in figure 3, one of the raised portions 30, 32 extends rearwardly in the direction of axis LP by an amount M greater than the other of the raised portions and, thus presents an angled rear arranged at angle β the use of which will be described in detail later herein. It will be appreciated that either of the raised portions 30, 32 may be the one that extends rearwardly the most but figure 3 illustrates an arrangement in which the rear portion 30r of the first portion 30 extends rearwardly the most. As best seen in figure 5, the front portion 30f of the first portion 30 may also extend forwardly of the front of the second portion 32 by an amount N. Alternatively, the front portion 32f of the second portion 32 may extend forwardly of the front of the first portion 30 by an amount N.

As shown, the rear most ends 30r, 32r are staggered relative to each other such that the rear of the positioner 16 is angled at an angle β relative to a perpendicular P to longitudinal axis LP and the front most end 30f, 32f may also be angled at an angle β1 to a perpendicular P2 of longitudinal axis LP. Angles β and β1 may be equal to each other or different to each other.

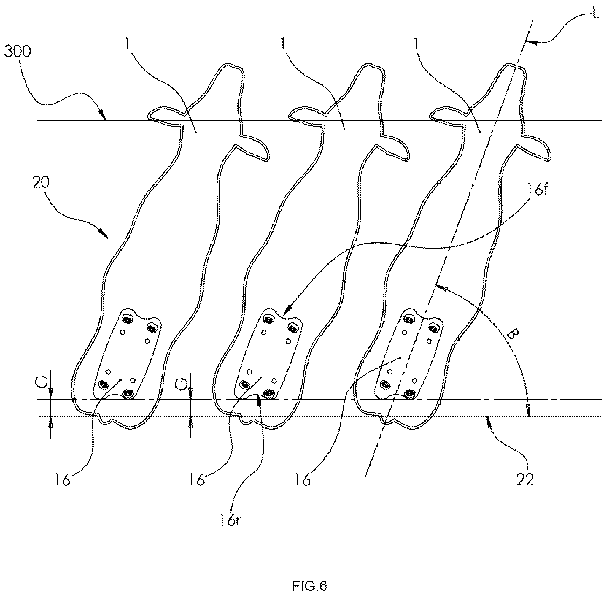

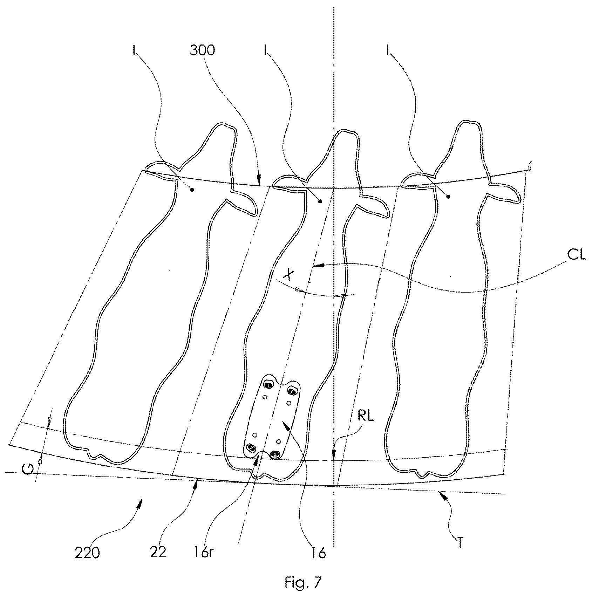

The use of both forward and rearward projections on one side allows the positioner to be placed either way around such that, in a first position the left -hand side (LHS) raised portion (when looking forward from the rear of the positioner 16) is the one that extends rearwardly and, optionally, also forwardly whilst in a second position the right-hand side (RHS) raised portion is the one that extends rearwardly and, optionally, also forwardly. This arrangement allows a single positioner of common design to be used in left or right hand angled milking stalls without modification. When angle β and β1 are different the positioner 16 may be positioned at different angles α relative to the rear edge 22 of the stall 20 depending upon which way round the positioner 16 is installed. It will, therefore, be appreciated that M and N may be equal or different to each other such as to determine the angle β and β1. It will also be appreciated that the magnitude of M and/ or N set the angle β and β1 and it is, thus, possible to select the magnitudes of M and/ or N such as to ensure a consistent and equal gap G between the rearmost ends 30r and 32r of the positioner 16 and any rear edge 22 of a milking stall 20 in which the positioner 16 is positioned when the positioner 16 is aligned at an angle θ (fig 6 and 7) relative to the rear edge 22 of a stall 20. Figure 6 shows the positioner 16 installed in a herringbone arrangement where angle θ is relative to the rearmost edge 22 of the stall. Figure 7 illustrates the arrangement where angle θ is relative to the rearmost edge 22 of a rotary milking platform (220) and where angle θ is relative to a tangent T of the radial line RL of the stall.

Preferably, the positioning device 16 comprises more than one pair of first and second raised portions and more than one valley region located there between, in such a case it is envisaged, for example, that two pairs of raised portions (i.e. four raised portions in total) might be arranged in a 2x2 grid formation with two valley regions located between them; preferably one valley region will run in a general direction along the central longitudinal axis (LP) of the base plate and the other valley region will preferably run in a general direction perpendicular to the central longitudinal axis (LP), thereby forming a "+" type shape. In an alternative example, three pairs of raised portions might be used in a 2x3 grid formation and in this case three valley regions would preferably be formed, for example, one valley region will preferably run in a general direction along the central longitudinal axis (LP), and two other valley regions will preferably be generally parallel to each other and preferably run in a general direction perpendicular to the axis LP. Other arrangements may include more pairs of raised portions in a 2xn grid formation, where "n" is the number of pairs; in this arrangement, the number of valley regions which run in a general direction perpendicular to the axis LP will be "n-1".

In preferred positioning device arrangements which include multiple pairs of raised portions ("n") and multiple valley regions, the rearward and/or forward projections/extensions discussed above will preferably be provided by the shape and/or position of the raised portions located adjacent the front end 16f and/or rear end 16r of the positioning device 16, on the first side 16s and/or the second side 16t of the positioning device 16.

In a further preferred positioning device, one or more of the first and second raised portions may comprise a plurality of smaller raised portions which may be arranged adjacent to each other, preferably in one or more rows which preferably extend in a direction that is generally parallel to the central longitudinal axis (LP). Ideally, a valley region will extend between each of the rows of the smaller raised portions. The smaller raised portions need not all be the same size and/or shape, but preferably they are uniform in size and/or shape.

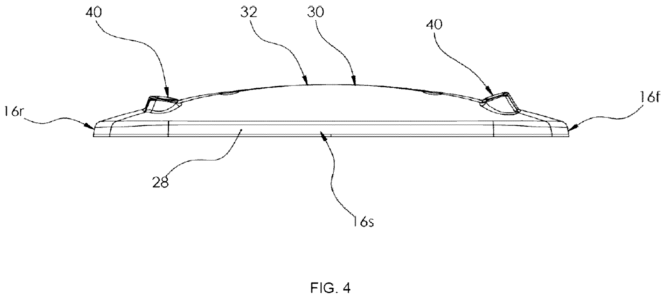

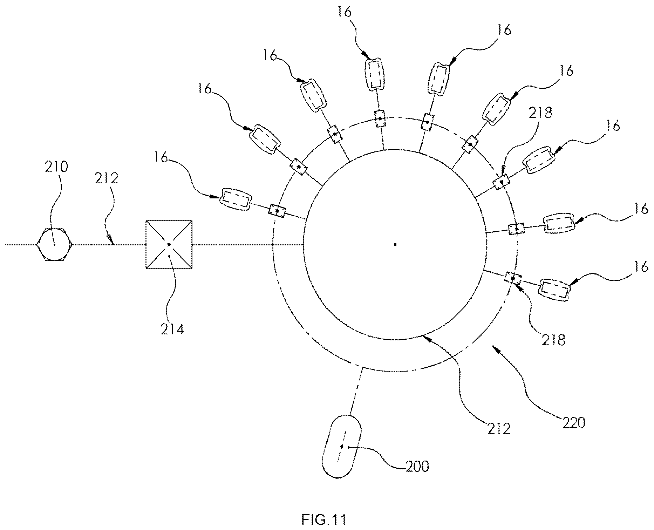

Shown in the drawings in general but shown particularly clearly in figures 4 and 5 are one or more spray nozzles 40. The nozzles are well known in the art and may be used for applying treatment to the teat of the animal in the stall in the usual manner. One or more nozzles may be employed depending on the treatment requirements and a nozzle may be provided in one or more positions on the positioner. Preferably, the one or more nozzles is / are positioned on one or more of the raised portions 30, 32. If so provided, the nozzles are, preferably, positioned towards each end of each raised portion, as shown in the figures. In the preferred arrangement four nozzles are provided with one nozzle being provided towards the end of each raised portion 30, 32. As shown in figure 4, the one or more nozzles 40 may be angled at angle C or angle D such as to cause any spray emanating therefrom to be sprayed upwardly at an angle selected to optimise the spray onto the teat of any animal positioned thereover. A spray nozzle controller 200 may be provided to activate the one or more nozzles whilst an optional remote reservoir or container shown diagrammatically at 210 may be provided as a source of fluid to be delivered from the one or more nozzles 40. A supply system, best seen in figure 11, and shown schematically at 212 may be used to connect the reservoir 210 to the nozzles 40. A pump 214 may be provided to pump any fluid to the nozzles 40 whilst one or more or all of said nozzles may include a solenoid operated valve 218 operated by the controller 200 such as to cause supply of fluid to said nozzles as and when desired.

Figures 3 and 5 illustrate a possible mounting member 106 in the form of, for example, one or more apertures or means defining one or more apertures 108 passing through the positioner 16 at convenient positions across the surface thereof through which bolts or other such fasteners (not shown) may be passed such as to secure the positioner 16 to the floor 18 of a stall 20 in which it is positioned. Suitable covers such as are shown at 110 in figure 5 may be provided to cover the mounting members 106 once installed.

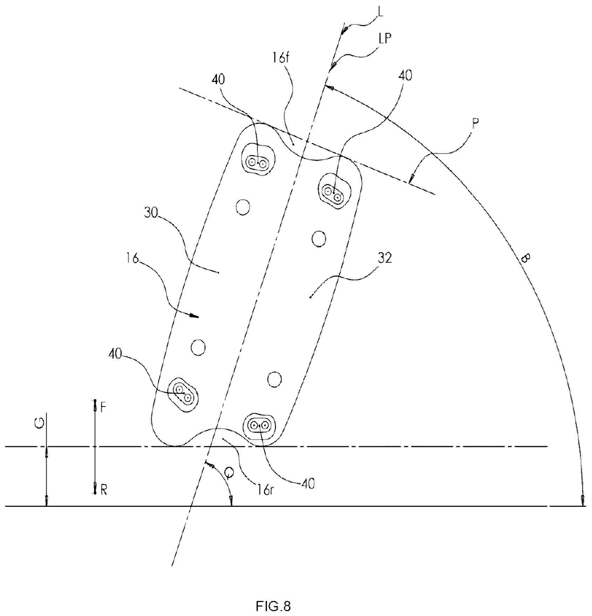

Reference is now made to figures 6, 7 and 8 which illustrate the present invention in combination with the two types of milking stall mentioned above and which also illustrate some of the advantages associated with the present invention. Figure 6 is illustrative of a herringbone or angled stall arrangement in which the longitudinal axis L of each stall is at an angle other than 90 degrees to the rear edge 22. Typically, stalls are at an angle of between 30° to 90°, often 30° to 70° or 30° to 60° and the angle is selected to allow for easy access to the stall by the animal whilst also allowing for a more compact stall arrangement. From figure 6 and figure 8, it will be appreciated that the angles rear of the positioner 16 according to aspects of the present invention is able to ensure an even gap G between the rear portions 30r, 32r and the rear edge 22 of the stall 20. It is, therefore, possible to select the size of the gap G such that it is too small for an animal to comfortably place a hoof rearward R of the rear of the positioner 16 such as to encourage the animal to move forwards in the direction of arrow F such as to ensure the rearmost hooves of the animal are positioned either side of the positioner rather than rearward thereof. When the animal is encouraged to position its rear hooves to the sides of the positioner, it is more likely to adopt a position in which the teats thereof are positioned centrally over the positioner and each rear hoof is at approximately the same longitudinal position. Such positioning will ensure the animal is also more forwards and this will allow for the head of the animal to be more readily positioned over the desired feeding line 300 in figures 6 and 7 whilst also ensuring the teats are easily accessible for milking and treatment.

The arrangement in a rotary or circular stall arrangement is best seen in figure 7 and from which it will be appreciated that the central line CL of each stall 20 is angled relative to the radial line RL of the rotary platform. The same arrangement is adopted to ensure that the gap G at the rear of the positioner 16 is present but, this time, the positioner angle is relative to a tangent T of the circular rear edge 22 of the platform 220.

The present invention also encompasses a milking platform or stall arrangement having a positioning device as described or shown or claimed herein and also encompasses an arrangement including the stall with the remote reservoir container 210, a control 200 and a supply system 212 for supplying fluid from the reservoir container 210 to the nozzles 40. The platform or stall may be of a herringbone arrangement or a rotary or circular arrangement.

It will be appreciated that the positioner 16 may be placed at any one of a number of positions relative to rear edge 22 but for the reader's benefit and guidance, it has been found that a gap G of between 0 and 150mm is appropriate for cows whilst smaller gaps G may be required for sheep and goats and other animals.

## Claims

1. A positioning device (16) that encourages animals to stand in a desired position, having a front end (16f) and a rear end (16r) and having a longitudinal axis (LP), comprising a base plate (18) with one pair of first and second raised portions (30, 32) of respective lengths (L1, L2) and upstanding from the base plate (18) and one valley region located between the raised portions (30, 32), wherein one of said raised portions (30 or 32) extends rearwardly of the other of said raised portions (32, 30) in the direction of axis LP by an amount (N).

2. A positioning device (16) as claimed in claim 1, wherein one of said first or second raised portions (30 or 32) extends forwardly of the other of said raised portions (32, 30) in the direction of axis (LP) by an amount (M) greater than the other (32, or 30).

3. A positioning device (16) as clamed in either of claims 1 or claim 2, wherein said first of said raised portions (30) extends forwardly and rearwardly in the direction of axis (LP) by an amount (M, N).

4. A positioning device (16) as claimed in any one of claims 1 to 3, wherein said first raised portion (30) comprises the portion on the Left-Hand Side (LHS) of the longitudinal axis (LP) when looking forwards from the rear of the device (16r).

5. A positioning device (16) as claimed in any one of claims 1 to 3, wherein said first raised portion (30) comprises the portion on the Right-Hand Side (RHS) of the longitudinal axis (LP) when looking forwards from the rear of the device (16r).

6. A positioning device (16) as claimed in any one of claims 1 to 5 wherein the amount M is equal to the amount N.

7. A positioning device (16) as claimed in any one of claims 1 to 6, wherein the amount M is not equal to the amount N.

8. A positioning device (16) as claimed in any one of claims 1 to 7 and wherein the device (16) includes a rear portion (30r, 32r) angled at an angle (β) relative to a perpendicular P to the longitudinal axis (LP) of the positioner (16).

9. A positioning device (16) as claimed in any one of clams 1 to 8 when positioned within an angled milking stall having a longitudinally extending axis L and a rear edge (22) at an angle B relative to said longitudinal axis L and wherein said positioning device (16) is installed at an angle to said rear edge (22), thereby to provide an even gap G between the rear portion (30r, 32r) and rear edge (22).

10. A positioning device (16) as claimed in any one of clams 1 to 8 when positioned on a rotary milking stall having a radial axis RL and a rear edge (22) at an angle α relative to said longitudinal axis radial axis RL and wherein said positioning device (16) is installed at an angle to a tangent T of said rear edge (22), thereby to provide an even gap G between the rear portion (30r, 32r) and the rear edge (22).

11. A positioning device (16) as claimed in any one of claims 1 to 10, wherein the profile of each of the raised portions (30, 32), and the profile of one or more of the valley regions, is convex.

12. A positioning device according to any preceding claim comprising one or more further pairs of first and second raised portions (30, 32) either side of the valley region, wherein one of the raised portions in the further pair of raised portions that is located adjacent the rear end (16r) of the positioning device (16), extends rearwardly of the other of the raised portions in the pair of raised portions that is located adjacent the rear end (16r) of the positioning device (16), in the direction of axis LP by an amount (N); and/or one of the raised portions in the further pair of raised portions that is located adjacent the front end (16f) of the positioning device (16), extends forwardly of the other of the raised portions in the pair of raised portions that is located adjacent the front end (16f) of the positioning device (16), in the direction of axis (LP) by an amount (M).

13. A positioning device (16) as claimed in any one of claims 1 to 12 further comprising one or more spray nozzles (40).

14. A positioning device (16) as claimed in claim 13 wherein the one or more spray nozzles (40) is located on one or more of the raised portions (30, 32).15.

15. A positioning device (16) as claimed in claim 14 and including four spray nozzles (40).

16. A positioning device (16) as claimed in any one of claims 13 to 15 and further including a spray nozzle control (200) to activate one or more of the nozzles to spray in any combination.

17. A positioning device (16) as claimed in any preceding claim and including mounting member (106, 108) for enabling the mounting of the device (16) to the floor of a milking parlour and/or the platform of a rotary-platform milking system.

18. A positioning device (16) as claimed in any one of claims 13 to 17 and further comprising a remote reservoir container (210) and supply system (212) between the reservoir container (200) and the one or more nozzles (40).

19. A positioning device (16) as claimed in claim 18 wherein the remote reservoir container (200) is located on a platform of a rotary platform milking system (220).

20. A positioning device (16) as claimed in any one of claims 1 to 18 and including a milking platform (220).

21. A positioning device (16) as claimed in any one of claims 1 to 20 and including a rotary milking platform (220).

## Patentansprüche

1. Positionierungsvorrichtung (16), die Tiere dazu bewegt, in einer gewünschten Position zu stehen, mit einem vorderen Ende (16f) und einem hinteren Ende (16r) und mit einer Längsachse (LP), umfassend eine Basisplatte (18) mit einem Paar aus einem ersten und einem zweiten erhabenen Abschnitt (30, 32) von jeweiligen Längen (L1, L2) und von der Basisplatte (18) nach oben ragend sowie einer Senkenregion, die zwischen den erhabenen Abschnitten (30, 32) angeordnet ist, wobei sich einer der erhabenen Abschnitte (30 oder 32) in Richtung der Achse LP von dem anderen der erhabenen Abschnitte (32, 30) um einen Betrag (N) nach hinten erstreckt.

2. Positionierungsvorrichtung (16) nach Anspruch 1, wobei sich einer von dem ersten oder zweiten erhabenen Abschnitt (30 oder 32) von dem anderen der erhabenen Abschnitte (32, 30) in Richtung der Achse (LP) um einen Betrag (M) mehr als der andere (32 oder 30) nach vorne erstreckt.

3. Positionierungsvorrichtung (16) nach entweder Anspruch 1 oder Anspruch 2, wobei sich der erste der erhabenen Abschnitte (30) in Richtung der Achse (LP) um einen Betrag (M, N) nach vorne und nach hinten erstreckt.

4. Positionierungsvorrichtung (16) nach einem beliebigen der Ansprüche 1 bis 3, wobei bei Betrachtung von der Rückseite der Vorrichtung (16r) nach vorne der erste erhabene Abschnitt (30) den Abschnitt auf der linken Seite (LHS) der Längsachse (LP) umfasst.

5. Positionierungsvorrichtung (16) nach einem beliebigen der Ansprüche 1 bis 3, wobei bei Betrachtung von der Rückseite der Vorrichtung (16r) nach vorne der erste erhabene Abschnitt (30) den Abschnitt auf der rechten Seite (RHS) der Längsachse (LP) umfasst.

6. Positionierungsvorrichtung (16) nach einem beliebigen der Ansprüche 1 bis 5, wobei der Betrag M gleich dem Betrag N ist.

7. Positionierungsvorrichtung (16) nach einem beliebigen der Ansprüche 1 bis 6, wobei der Betrag M nicht gleich dem Betrag N ist.

8. Positionierungsvorrichtung (16) nach einem beliebigen der Ansprüche 1 bis 7 und wobei die Vorrichtung (16) einen hinteren Abschnitt (30r, 32r) aufweist, der relativ zu einer Senkrechten P auf die Längsachse (LP) der Positionierungsvorrichtung (16) in einem Winkel (β) abgewinkelt ist.

9. Positionierungsvorrichtung (16) nach einem beliebigen der Ansprüche 1 bis 8, wenn sie innerhalb eines abgewinkelten Melkstandes angeordnet ist, der eine sich in Längsrichtung erstreckende Achse L und eine Hinterkante (22) in einem Winkel β relativ zu der Längsachse L aufweist, und wobei die Positionierungsvorrichtung (16) in einem Winkel zu der Hinterkante (22) angebracht ist, um dadurch einen gleichmäßigen Zwischenraum G zwischen dem hinteren Abschnitt (30r, 32r) und der Hinterkante (22) vorzusehen.

10. Positionierungsvorrichtung (16) nach einem beliebigen der Ansprüche 1 bis 8, wenn sie an einem Karussellmelkstand angeordnet ist, der eine radiale Achse RL und eine Hinterkante (22) in einem Winkel α relativ zu der radialen Achse RL aufweist, und wobei die Positionierungsvorrichtung (16) in einem Winkel zu einer Tangente T der Hinterkante (22) angebracht ist, um dadurch einen gleichmäßigen Zwischenraum G zwischen dem hinteren Abschnitt (30r, 32r) und der Hinterkante (22) vorzusehen.

11. Positionierungsvorrichtung (16) nach einem beliebigen der Ansprüche 1 bis 10, wobei das Profil jedes der erhabenen Abschnitte (30, 32) und das Profil einer oder mehrerer der Senkenregionen konvex ist.

12. Positionierungsvorrichtung nach einem beliebigen vorhergehenden Anspruch, umfassend ein oder mehrere weitere Paare aus einem ersten und einem zweiten Abschnitt (30, 32) auf beiden Seiten der Senkenregion, wobei einer der erhabenen Abschnitte in dem weiteren Paar von erhabenen Abschnitten, welches dem Hinterende (16r) der Positionierungsvorrichtung (16) benachbart angeordnet ist, sich von dem anderen der erhabenen Abschnitte in dem Paar von erhabenen Abschnitten, welches dem Hinterende (16r) der Positionierungsvorrichtung (16) benachbart angeordnet ist, in Richtung der Achse LP um einen Betrag (N) nach hinten erstreckt; und/oder einer der erhabenen Abschnitte in dem weiteren Paar von erhabenen Abschnitten, welches dem Vorderende (16f) der Positionierungsvorrichtung (16) benachbart angeordnet ist, sich von dem anderen der erhabenen Abschnitte in dem Paar von erhabenen Abschnitten, welches dem Vorderende (16f) der Positionierungsvorrichtung (16) benachbart angeordnet ist, in Richtung der Achse LP um einen Betrag (M) nach vorne erstreckt.

13. Positionierungsvorrichtung (16) nach einem beliebigen der Ansprüche 1 bis 12, ferner umfassend eine oder mehrere Sprühdüsen (40).

14. Positionierungsvorrichtung (16) nach Anspruch 13, wobei die eine oder mehreren Sprühdüsen (40) an einem oder mehreren der erhabenen Abschnitte (30, 32) angeordnet sind.

15. Positionierungsvorrichtung (16) nach Anspruch 14 und umfassend vier Sprühdüsen (40).

16. Positionierungsvorrichtung (16) nach einem beliebigen der Ansprüche 13 bis 15 und ferner umfassend eine Sprühdüsensteuerung (200), um eine oder mehrere der Düsen anzusteuern, um in jedweder Kombination zu sprühen.

17. Positionierungsvorrichtung (16) nach einem beliebigen vorhergehenden Anspruch und umfassend ein Montageglied (106, 108) zum Ermöglichen des Anbringens der Vorrichtung (16) an dem Boden eines Melkraums und/oder der Plattform eines Karussellplattformmelksystems.

18. Positionierungsvorrichtung (16) nach einem beliebigen der Ansprüche 13 bis 17 und ferner umfassend einen entfernt angeordneten Speicherbehälter (210) und ein Zufuhrsystem (212) zwischen dem Speicherbehälter (200) und der einen oder den mehreren Düsen (40).

19. Positionierungsvorrichtung (16) nach Anspruch 18, wobei der entfernt angeordnete Speicherbehälter (200) auf einer Plattform eines Karussellplattformmelksystems (220) angeordnet ist.

20. Positionierungsvorrichtung (16) nach einem beliebigen der Ansprüche 1 bis 18 und umfassend eine Melkplattform (220).

21. Positionierungsvorrichtung (16) nach einem beliebigen der Ansprüche 1 bis 20 und umfassend eine Karussellmelkplattform (220).

## Revendications

1. Dispositif de positionnement (16) qui encourage des animaux à se tenir à une position souhaitée, comportant une extrémité avant (16f) et une extrémité arrière (16r) et comportant un axe longitudinal (LP), comprenant une plaque de base (18) avec une paire de première et seconde parties en relief (30, 32) de longueurs respectives (L1, L2) et verticales depuis la plaque de base (18) et une région de vallée située entre les parties en relief (30, 32), dans lequel l'une parmi lesdites parties en relief (30 ou 32) s'étend vers l'arrière de l'autre parmi lesdites parties en relief (32, 30) dans la direction de l'axe LP d'une quantité (N).

2. Dispositif de positionnement (16) selon la revendication 1, dans lequel l'une parmi lesdites première et seconde parties en relief (30 ou 32) s'étend vers l'avant de l'autre parmi lesdites parties en relief (32, 30) dans la direction de l'axe (LP) d'une quantité (M) supérieure à l'autre (32, ou 30).

3. Dispositif de positionnement (16) selon la revendication 1 ou 2, dans lequel ladite première parmi lesdites parties en relief (30) s'étend vers l'avant et vers l'arrière dans la direction de l'axe (LP) d'une quantité (M, N).

4. Dispositif de positionnement (16) selon l'une quelconque des revendications 1 à 3, dans lequel ladite première partie en relief (30) comprend la partie sur le côté gauche (LHS) de l'axe longitudinal (LP) en regardant vers l'avant depuis l'arrière du dispositif (16r).

5. Dispositif de positionnement (16) selon l'une quelconque des revendications 1 à 3, dans lequel ladite première partie en relief (30) comprend la partie sur le côté droit (RHS) de l'axe longitudinal (LP) en regardant vers l'avant depuis l'arrière du dispositif (16r).

6. Dispositif de positionnement (16) selon l'une quelconque des revendications 1 à 5, dans lequel la quantité M est égale à la quantité N.

7. Dispositif de positionnement (16) selon l'une quelconque des revendications 1 à 6, dans lequel la quantité M n'est pas égale à la quantité N.

8. Dispositif de positionnement (16) selon l'une quelconque des revendications 1 à 7, dans lequel le dispositif (16) inclut une partie arrière (30r, 32r) inclinée à un angle (β) par rapport à une perpendiculaire P à l'axe longitudinal (LP) du dispositif de positionnement (16).

9. Dispositif de positionnement (16) selon l'une quelconque des revendications 1 à 8 lorsqu'il est positionné à l'intérieur d'une salle de traite inclinée comportant un axe d'extension longitudinale L et un bord arrière (22) à un angle B par rapport audit axe longitudinal L et dans lequel ledit dispositif de positionnement (16) est installé à un angle par rapport audit bord arrière (22), pour fournir de ce fait un espacement uniforme G entre la partie arrière (30r, 32r) et le bord arrière (22).

10. Dispositif de positionnement (16) selon l'une quelconque des revendications 1 à 8 lorsqu'il est positionné sur une salle de traite rotative comportant un axe radial RL et un bord arrière (22) à un angle α par rapport audit axe radial RL et dans lequel ledit dispositif de positionnement (16) est installé à un angle par rapport à une tangente T dudit bord arrière (22), pour fournir de ce fait un espacement uniforme G entre la partie arrière (30r, 32r) et le bord arrière (22).

11. Dispositif de positionnement (16) selon l'une quelconque des revendications 1 à 10, dans lequel le profil de chacune parmi les parties en relief (30, 32), et le profil d'une ou plusieurs parmi les régions de vallée, sont convexes.

12. Dispositif de positionnement selon l'une quelconque des revendications précédentes comprenant une ou plusieurs autres paires de première et seconde parties en relief (30, 32) de part et d'autre de la région de vallée, dans lequel l'une parmi les parties en relief dans l'autre paire de parties en relief qui est située adjacente à l'extrémité arrière (16r) du dispositif de positionnement (16), s'étend vers l'arrière de l'autre parmi les parties en relief dans la paire de parties en relief qui est située adjacente à l'extrémité arrière (16r) du dispositif de positionnement (16), dans la direction de l'axe LP d'une quantité (N) ; et/ou l'une parmi les parties en relief dans l'autre paire de parties en relief qui est située adjacente à l'extrémité avant (16f) du dispositif de positionnement (16), s'étend vers l'avant de l'autre parmi les parties en relief dans la paire de parties en relief qui est située adjacente à l'extrémité avant (16f) du dispositif de positionnement (16), dans la direction de l'axe (LP) d'une quantité (M).

13. Dispositif de positionnement (16) selon l'une quelconque des revendications 1 à 12, comprenant en outre une ou plusieurs buses de pulvérisation (40).

14. Dispositif de positionnement (16) selon la revendication 13, dans lequel les une ou plusieurs buses de pulvérisation (40) sont situées sur une ou plusieurs parmi les parties en relief (30, 32).

15. Dispositif de positionnement (16) selon la revendication 14 et incluant quatre buses de pulvérisation (40).

16. Dispositif de positionnement (16) selon l'une quelconque des revendications 13 à 15 et incluant en outre une commande de buse de pulvérisation (200) pour activer une ou plusieurs parmi les buses pour pulvériser dans n'importe quelle combinaison.

17. Dispositif de positionnement (16) selon l'une quelconque des revendications précédentes et incluant un organe de montage (106, 108) pour permettre le montage du dispositif (16) sur le plancher d'un local de traite et/ou la plate-forme d'un système de traite à plate-forme rotative.

18. Dispositif de positionnement (16) selon l'une quelconque des revendications 13 à 17 et comprenant en outre un récipient de réservoir distant (210) et un système d'alimentation (212) entre le récipient de réservoir (200) et les une ou plusieurs buses (40).

19. Dispositif de positionnement (16) selon la revendication 18, dans lequel le récipient de réservoir distant (200) est situé sur une plate-forme d'un système de traite à plate-forme rotative (220).

20. Dispositif de positionnement (16) selon l'une quelconque des revendications 1 à 18 et incluant une plate-forme de traite (220).

21. Dispositif de positionnement (16) selon l'une quelconque des revendications 1 à 20 et incluant une plate-forme de traite rotative (220).
